# EUROPÄISCHE PATENTSCHRIFT

(11) **EP 1 201 574 B1**
(45) Veröffentlichungstag und Bekanntmachung des Hinweises auf die Patenterteilung: **15.09.2004**
(21) Anmeldenummer: 01124822.6
(22) Anmeldetag: 18.10.2001
(51) Int. Cl.: B65G 57/16

(54) **Verfahren zum Stapeln von Teilen aus thermoplastischem Kunststoff und Vorrichtung zur Durchführung des Verfahrens**
Method and device for piling parts made of thermoplastic material
Procédé et dispostif pour empiler des pièces en matière thermoplastique

(30) Priorität: 25.10.2000 DE 10052759
(43) Veröffentlichungstag der Anmeldung: 02.05.2002
(73) Patentinhaber: Adolf Illig Maschinenbau GmbH & Co. KG, 74081 Heilbronn (DE)
(72) Erfinder: Trautwein, Herbert, 71737 Kirchberg (DE); Wozny, Michael, 74076 Heilbronn (DE)

(56) Entgegenhaltungen:
- EP-A- 0 955 150
- DE-A- 19 742 107
- DE-U- 7 330 214
- US-A- 3 491 633

## Beschreibung

Die Erfindung betrifft eine Vorrichtung zum Stapeln von Teilen aus thermoplastischem Kunststoff mit den Merkmalen des Oberbegriffes des Patentanspruches 1.

Die in einer Thermoformmaschine mittels eines kombiniert formenden und stanzenden Werkzeuges geformten und ausgestanzten Teile werden nach dem Auswerfen aus dem Form-/Stanzwerkzeug in Stapelmagazine übergeben. Dies kann wie in der DE 33 46 628 C2 beschrieben direkt erfolgen, indem der Formboden des Werkzeuges verschoben und die Teile dadurch in die Stapelmagazine übergeben und dort zurückgehalten werden. Oder indirekt durch Zwischenschaltung einer Übergabeeinrichtung in Form eines Wendekopfes (DE 198 52 359 A1 ) bzw. einer Fangplatte (DE 198 12 414 A1 und 198 48 628 A1).
Ein Problem besteht darin, die sich in den Stapelmagazinen bildenden Stapel bei einer bestimmten Länge bzw. Teileanzahl zu leeren und die Stapel weiterzuführen zu einer Nachbearbeitungs- oder Verpackungseinrichtung, insbesondere bei mehrreihiger Auslegung des Form-/Stanzwerkzeuges. Denn die Stapel müssen dieser Nachbearbeitungs- oder Verpackungseinrichtung in der Regel alle hintereinanderliegend, also in einem großen Stapel, zugeführt werden. Dort werden die Teile z. B. gebördelt und dann werden wieder Stapel abgelängt auf das Maß des Kartons, in der sie verpackt werden.

In der DE 198 48 628 A1 wird vorgeschlagen, die zunächst in einer pro Takt verfahrbaren Fangplatte gestapelten Teile nach Erreichen einer vorgegebenen Anzahl als Stapel in einen verfahrbaren Stapelkorb zu überführen, der dann die Stapel zu einer Entladestation führt und aus dem sie reihenweise auf ein Querförderband geschoben werden. Diese bekannte Vorrichtung erlaubt die Überführung der Stapel liegend reihenweise auf ein horizontal verlaufendes Querförderband. Stapel von relativ flachen Teilen, wie Deckeln und Schalen, neigen in dieser Lage zum Auseinanderdriften und können so nicht immer weiterbehandelt werden. Solche Stapel müssen vielfach stehend transportiert werden. Der Stapelkorb ist nicht schwenkbar ausgebildet und damit nicht universell einsetzbar. Die Teile werden relativ früh aus dem Stapelkorb entnommen und sind deshalb noch relativ warm, weil sie ineinander gestapelt im Stapelkorb schlecht abkühlen, weshalb die Gefahr ihrer Deformation besteht.

Die DE 197 42 107 A1 zeigt in Figur 8 eine Vorrichtung, bei der ein Stapelkorb von einer Aufnahmestation zu einer Abgabestation geführt wird, wobei eine Drehung des Stapelkorbes um 180° vorgesehen ist. Die Stapel werden stehend auf ein Förderband gesetzt. Eine Hintereinanderführung und eine automatische Weiterverarbeitung aller Stapel ist auf diese Weise nicht möglich.

Der Erfindung liegt die Aufgabe zugrunde, eine gattungsbildende Vorrichtung so zu gestalten, dass die Stapel trotz hoher Taktzahl beliebig gerichtet einer nachfolgenden Einrichtung zugeführt werden und aus flachen oder hohen Teilen bestehen können. Dabei sollte genügend Zeit zum Abkühlen der Teile vor ihrer Entnahme aus dem Stapelkorb und ihrer Weiterverarbeitung gegeben sein, um die Deformationsgefahr zu minimieren.

Gelöst ist diese Aufgabe durch die im Hauptanspruch angegebenen Maßnahmen.

Die Vorrichtung und vorteilhafte Ausbildungen sind anhand der schematischen Zeichnungen näher beschrieben. Es zeigen:

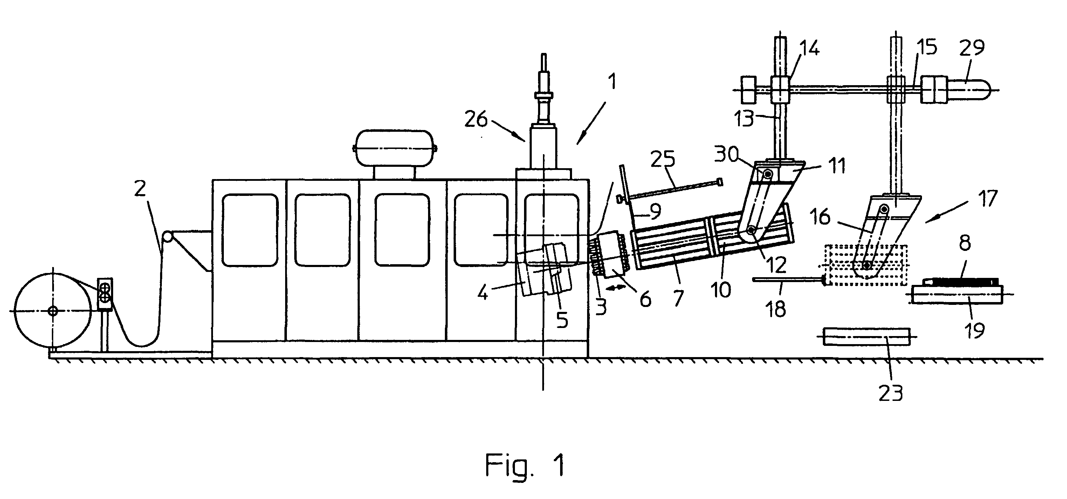

- Figur 1: eine Längsdarstellung der Vorrichtung mit vorgeschalteter Thermoformmaschine
- Figur 2: eine Draufsicht auf eine Version der Vorrichtung
- Figur 3: eine Variante der Stapelübergabe.

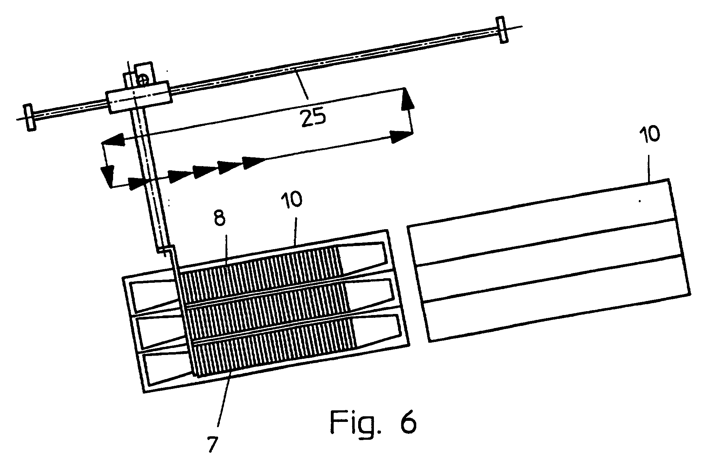

- Figur 4 bis 6: einen Pufferkäfig mit einer Stapelentnahmeeinrichtung mit der Funktion einer Gegenhalteeinrichtung
- Figur 7: eine Gestaltung der Erfindung mit mehreren wechselbaren Stapelkäfigen.
- Figur 8: eine Variante der Gestaltung des Trägers für den Stapelkäfig.
- Figur 9: eine Variante der Verschiebeeinrichtung des Stapelkäfigs.

Die Vorrichtung wird einer Thermoformmaschine 1 nachgeschaltet, die eine Folienbahn 2 erwärmt und durch Druckluft in einer kombinierten Form-/Stanzstation 26 tiefzieht und die geformten Teile 3 ausstanzt. Der Tisch 4 wird mit dem Unterteil 5 des Form-/Stanzwerkzeuges geschwenkt und die Teile 3 werden aus dem Unterteil 5 ausgeworfen. Ein Wendekopf 6 übernimmt die Teile 3 und übergibt sie in den ortsfesten Pufferkäfig 7. In diesem bilden sich Stapel 8, wobei je nach Größe der Teile 3 und der Formfläche der vorgeschalteten Thermoformmaschine 1 mehrere Reihen von Stapeln 8 gebildet werden. Haben diese Stapel 8 eine vorgegebene Länge/Anzahl erreicht, wird ein Rechen 9 eingefahren und in Stapelrichtung verschoben, so dass die Stapel 8 im fluchtend zum Pufferkäfig 7 angeordneten Stapelkäfig 10 zu liegen kommen. Dieser Stapelkäfig 10 ist schwenkbar um eine horizontal liegende Achse 12 in einem Träger 11 gehalten. Der Träger 11 ist mit Stangen 13 verbunden, die in einem Führungsteil 14 vertikal verschiebbar mittels eines nicht dargestellten Antriebes gehalten sind. Das Führungsteil 14 wiederum ist horizontal an ortsfesten Führungen 15 über einen Antrieb 29 verschiebbar. Zum Schwenken des Stapelkäfigs 10 dient ein am Träger 11 angeordneter Antrieb 30, der über einen Kettentrieb 16 das Schwenken bewirkt.
Gemäß einer ersten Variante der Vorrichtung fährt der Träger 11 nach der Stapelübergabe mit dem Stapelkäfig 10 horizontal in die Stapelentnahmestation 17. Dort wird der Stapelkäfig 10 über den Antrieb 30 in horizontale Lage geschwenkt und ggf. soweit vertikal verschoben, dass über einen Ausstoßer 18 die Stapel 8 reihenweise auf das Querförderband 19 übergeben werden können. Nach Absenken des Stapelkäfigs 10 um einen Reihenabstand werden die anderen Stapel 8 mittels des Ausstoßers 18 auf das Querförderband 19 geschoben.

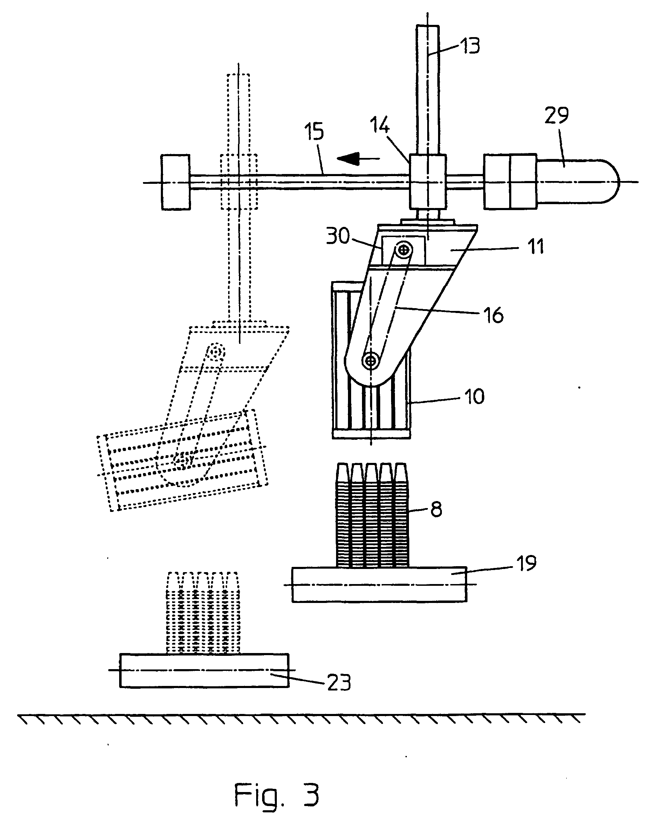

Figur 3 zeigt eine Variante der Vorrichtung in der Weise, dass der Stapelkäfig 10 vor der Abgabe der Stapel 8 und nach seiner horizontalen Verschiebung in die Vertikale schwenkt und die Stapel 8 auf das Querförderband 19 stehend aufsetzt und dann wieder abhebt (Lage Figur 3) und zurückfährt. Auf diese Weise können Stapel 8, bestehend aus flachen Teilen wie Deckeln oder flachen Schalen, weitertransportiert werden. In horizontaler Lage liegend würden solche Stapel 8 auseinanderfallen.
Ein Schwenken des Stapelkäfigs 10 kann bei Bedarf in jede gewünschte Schräglage erfolgen oder unterbleiben, sollte dies aus verschiedenen Gründen vorteilhaft sein.

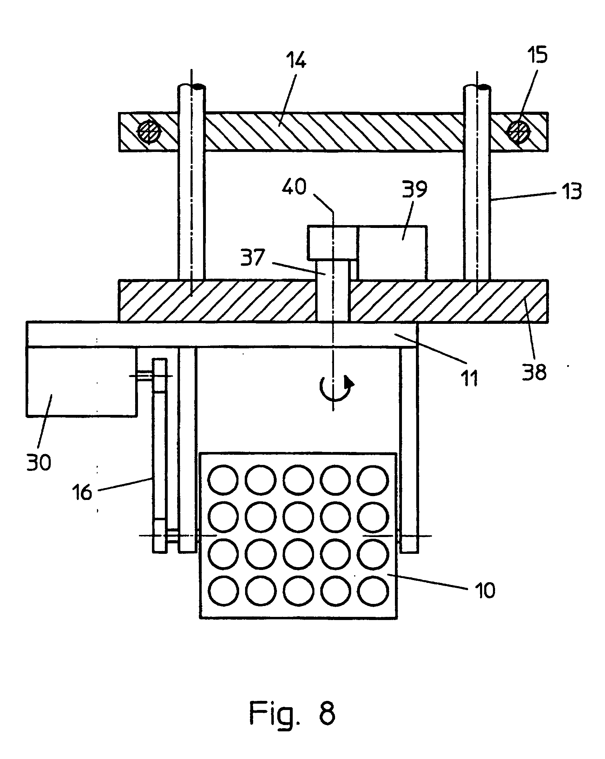

In Weiterbildung der Vorrichtung wird vorgeschlagen, den Träger 11 zusätzlich schwenkbar um eine vertikale Achse 40 auszubilden, wie es in Figur 8 dargestellt ist. Der Träger 11 sitzt drehbar mit einem Zapfen 37 in der Traverse 38, an der die Stangen 13 befestigt sind. Ein Antrieb 39, z.B. in Form eines pneumatischen Schwenkzylinders oder eines Servomotors, dient zum Schwenken des gesamten Trägers 11 um die Achse 40. Auf diese Weise kann ein Absetzen bzw. Ausschieben der Stapel 8 quer oder in jeder beliebigen Drehlage erfolgen, sollte dies aus verschiedenen Gründen der Weiterverarbeitung der Stapel 8 vorteilhaft sein.

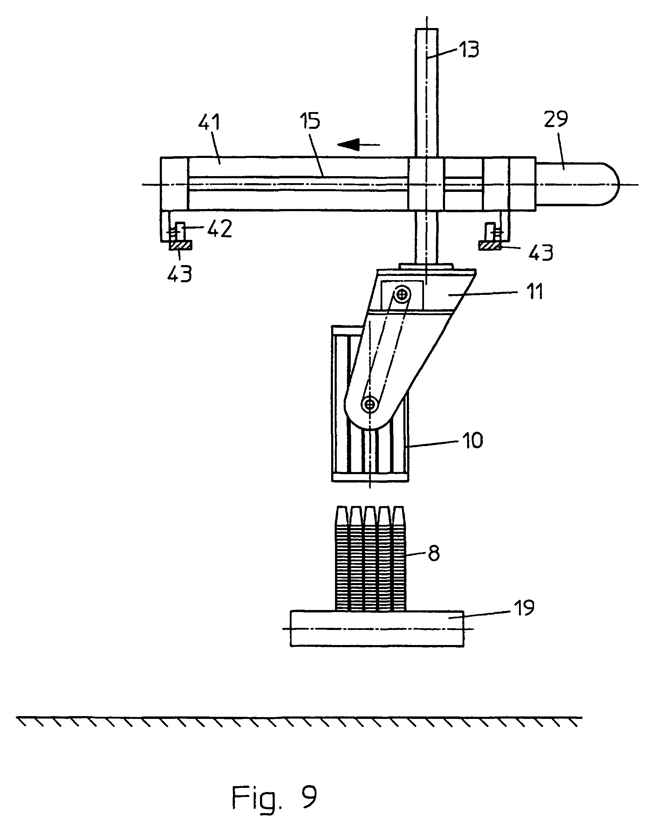

Noch universeller ist die Weiterbildung gemäß Figur 9. Indem die Führungen 15 an einem Rahmen 41 sitzen, der Rollen 42 trägt, kann dieser Rahmen 41 mit einem nicht dargestellten Antrieb auf Querträgem 43 quer zur Stapelrichtung verschoben werden. Auf diese Weise kann der Stapelkäfig 10 an beliebigen Stellen abgesetzt bzw. entleert werden, wie es günstig ist.

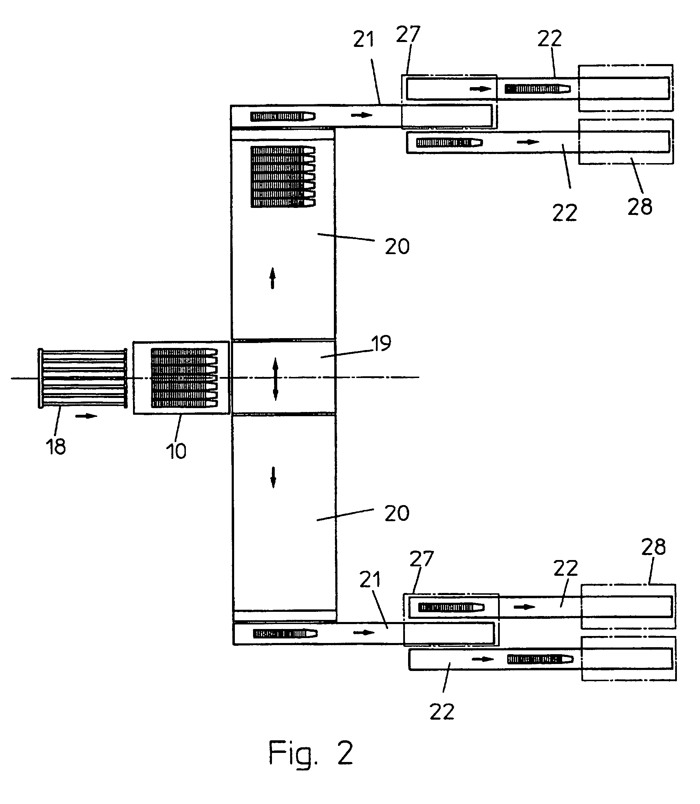

Figur 2 zeigt eine mögliche Weiterführung der Stapel 8. Das Querförderband 19 kann abwechselnd durch Rechts-/Linkslauf eine Reihe von Stapeln 8 auf eines der Förderbänder 20 überführen, diese bringen die Stapel 8 dann je auf ein Längsförderband 21 hintereinander, von dem aus eine Verteilung auf je zwei weitere Längsförderbänder 22 mittels einer Umsetzeinrichtung 27 möglich ist, um auf diese Weise eine große Anzahl von Teilen 3 in den insgesamt vier Nachbearbeitungsstationen 28, z. B. Bördelmaschinen, Verpackungsmaschinen, bearbeiten oder verarbeiten zu können, sollte dies erforderlich sein.

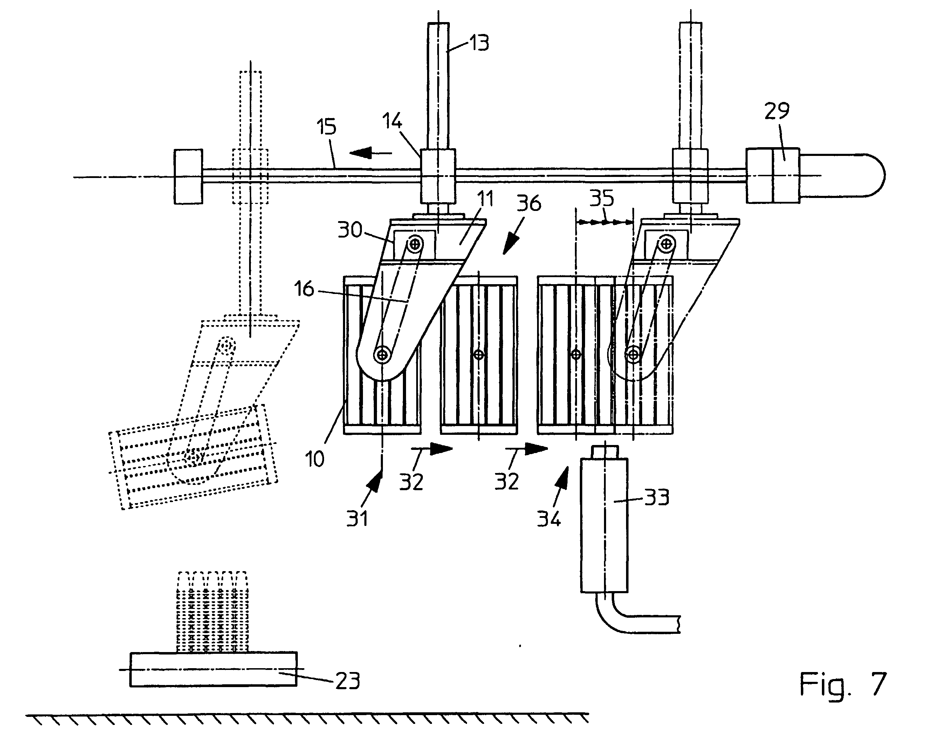

Eine Ausbildung der Erfindung gemäß Figur 7 besteht darin, mehrere Stapelkäfige 10 einzusetzen und diese automatisch koppelbar mit dem Träger 11 auszubilden. Der Träger 11 führt die Stapelkäfige 10 zu einer Absetzstation 31. Die Verbindung wird entkoppelt und jeder Stapelkäfig 10 wird horizontal durch eine Verschiebeeinrichtung 32 bis zu einer Entladestation 34 geführt, in der die Stapel 8 vorzugsweise reihenweise herausgeführt und beispielsweise einer Nachbearbeitungsstation 33 zugeführt werden.
Die Stapelkäfige 10 sind bei vertikaler Absetzung mit einer Einrichtung versehen, die reihenweise die Rückhaltung der Stapel 8 aufhebt, sodass sie nach unten aus dem Stapelkäfig 10 herausfallen. Eine Verschiebeeinrichtung 35 führt einen Vorschub um den Reihenabstand der Stapel 8 durch, sodass die nächste Reihe entleert werden kann.
Zwischen Absetzstation 31 und Entladestation 34 ist die Anordnung einer Kühlstation 36 möglich, in der in geeigneter Weise eine Kühlung der Stapel 8, z.B. durch Einblassen von Kühlluft, die steril sein kann, erfolgt. Ein geleerter Stapelkäfig 10 wird vom Träger 11 nach dessen horizontaler Verschiebung (Lage strichpunktiert in Figur 7) aufgenommen und zurück zum Pufferkäfig 7 geführt.
Anstelle des in Figur 7 dargestellten vertikalen Absetzens können die Stapelkäfige 10 in gleicher Weise horizontal geschwenkt und dann liegend abgesetzt und verschoben werden. Der reihenweise Austransport der Stapel 8 erfolgt dann durch einen Ausstoßer vergleichbar dem Ausstoßer 18 in Figur 2.
Wenn beim Anfahren der Thermoformmaschine 1 zunächst qualitativ noch schlechte Teile 3 produziert werden (Anfahrausschuss), können diese Teile 3 nach Schwenken des Stapelkäfigs 10 in vertikale Lage vorzugsweise auf ein seitlich des Querförderbandes 27 angeordnetes separates Querförderband 23 ausgeworfen oder auf dieses gesetzt, aus der Vorrichtung heraustransportiert und begutachtet werden. Kommen gute Teile wird die Vorrichtung auf Automatikbetrieb geschaltet. Auf diese Weise wird verhindert, dass qualitativ schlechte Teile in die Weiterproduktion laufen und aufwendig aussortiert werden müssen. Ein Übergeben oder Setzen auf das Querförderband 19 und Austransport nach außen ist ebenfalls möglich.

Die Vorrichtung mit einem ortsfesten Pufferkäfig 7 und einem oder mehreren verschiebbaren und schwenkbaren Stapelkäfigen 8 ermöglicht das Gegenhalten der vorderen Teile 3 der Stapel 8 in folgender Weise:

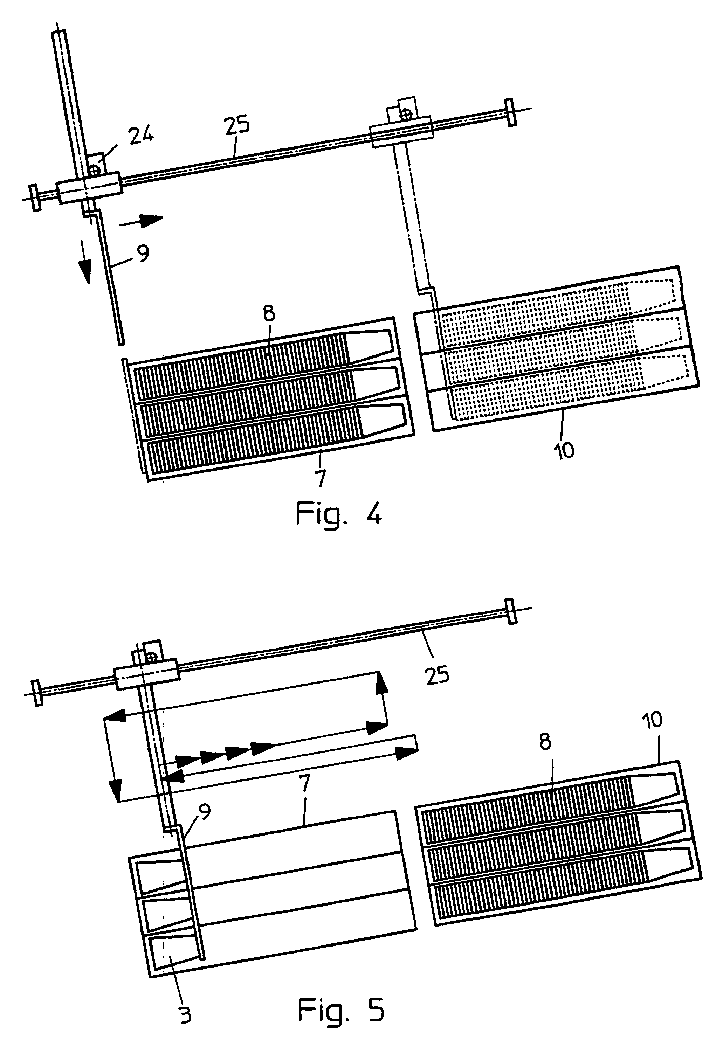

Figur 4 zeigt am Beispiel eines dreireihig ausgebildeten Form-/Stanzwerkzeuges die Anordnung eines Rechens 9, der senkrecht zur Stapelrichtung über einen Antrieb 24 verschiebbar ist und zwischen zwei Takten der Thermoformmaschine 1 eingeschoben wird. Er ist ferner an Führungen 25 in Stapelrichtung verschiebbar und übergibt die Stapel 8 aus dem Pufferkäfig 7 in den Stapelkäfig 10 (Lage strichpunktiert in Figur 4).

Eine Verfahrensweise ist die, nach dem Einschieben des Rechens 9 alle Stapel 8 in den Stapelkäfig 10 zu überführen und dann in eingefahrener Stellung den Rechen 9 zurückzufahren in den Pufferkäfig 7 in eine Stellung (siehe Figur 5), in der der Boden des vordersten Teiles 3 an ihm gehalten wird. Mit jedem Einstapeln eines nächsten Teils 3 in den Pufferkäfig 7 fährt der Rechen 9 einen programmierten Weg entsprechend dem Stapelabstand zwischen zwei Teilen 3 in Stapelrichtung weiter, so dass das vorderste Teil 3 immer gehalten ist. Kurz bevor die Stapel 8 ihre erforderliche Anzahl erreicht haben, fährt der Rechen 9 aus dem Pufferkäfig 7 heraus, nach links und wieder in die in Figur 4 links strichpunktiert dargestellte Lage, so dass jetzt die gesamten Stapel 8 aus dem Pufferkäfig 7 herausgeführt werden können. Danach fährt der Rechen 9 wieder in Ausgangslage. Dieser Bewegungsablauf ist in Figur 5 durch Pfeile dargestellt.

## Patentansprüche

1. Vorrichtung zum Stapeln von Teilen (3) aus thermoplastischem Kunststoff mit einem Pufferkäfig (7), in den die aus einer erwärmten Folienbahn (2) in einem Form-/Stanzwerkzeug geformten und ausgestanzten Teile (3) übergeben werden, und mit einem an einem Träger (11) schwenkbar um eine horizontale Achse (12) gehaltenen Stapelkäfig (10), der zu verschieben ist und in den die Teile (3) als Stapel (8) aus dem Pufferkäfig (7) überführt werden und mit dem die Teile (3) zu einer Absetzstation (31) geführt werden, **dadurch gekennzeichnet dass** eine automatisch betätigbare Kopplungseinrichtung zwischen Träger (11) und Stapelkäfig (10) und eine Verschiebeeinrichtung (32) zum Weitertransport der entkoppelten Stapelkäfige (10) von einer Absetzstation (31) in die Stapelentnahmestation (34) vorliegt.

2. Vorrichtung nach Anspruch 1, **dadurch gekennzeichnet, dass** der Träger (11) drehbar um eine vertikale Achse (40) ausgebildet ist.

3. Vorrichtung nach Anspruch 1 oder 2, **dadurch gekennzeichnet, dass** der Träger (11) in Stapelrichtung und/oder quer zur Stapelrichtung verschiebbar ausgebildet ist.

4. Vorrichtung nach einem der Ansprüche 1 bis 3, **dadurch gekennzeichnet, dass** zwischen Absetzstation (31) und Stapelentnahmestation (43) eine Kühlstation (36) angeordnet ist.

5. Vorrichtung nach einem der Ansprüche 1 bis 4, **dadurch gekennzeichnet, dass** die Einrichtung zum Überführen der Stapel (8) vom Pufferkäfig (7) in den Stapelkäfig (10) von einem Servomotor (29) angetrieben wird.

6. Vorrichtung nach einem der Ansprüche 1 bis 5, **dadurch gekennzeichnet, dass** die Einrichtung zum Überführen der Stapel (8) vom Pufferkäfig (7) in den Stapelkäfig (10) von einem quer zur und in Stapelrichtung verschiebbaren Rechen (9) gebildet wird.

7. Vorrichtung nach Anspruch 6, **dadurch gekennzeichnet, dass** der Rechen (9) zum Überführen der Stapel (8) vom Pufferkäfig (7) in den Stapelkäfig (10) zeitweise als Stützeinrichtung für die in den Pufferkäfig (7) übergebenen Teile (3) verwendet wird.

8. Vorrichtung nach Anspruch 7, **dadurch gekennzeichnet, dass** der Rechen (9) zunächst alle Stapel (8) aus dem Pufferkäfig (7) in den Stapelkäfig (10) überführt und dann in eingefahrenem Zustand zurück in den Pufferkäfig (7) vor die vordersten Teile (3) geführt und mehrere Takte jeweils um den Stapelabstand zwischen zwei Teilen (3) in Stapelrichtung verschoben wird.

9. Verfahren nach Anspruch 7, **dadurch gekennzeichnet, dass** der Rechen (9) nach dem seitlichen Einfahren hinter die im Pufferkäfig (7) befindlichen Stapel (8) zunächst einen Hub ausführt, der der Höhe der Teile (3) entspricht, dann mehrere Takte jeweils einen Hub entsprechend dem Stapelabstand der Teile (3) ausführt und dann das Überführen der Stapel (8) in den Stapelkäfig (10) durchführt.

## Claims

1. Device for stacking articles (3) of thermoplastic plastics material with a buffer cage (7), into which the articles (3), which are moulded and punched out of a heated film strip (2) in a moulding and punching tool, are transferred, and with a stack cage (10), which is mounted at a carrier (11) to be pivotable about a horizontal axis (12) and which is to be displaced, the articles (3) being transferred into the stack cage as a stack (8) from the buffer cage (7) and being guided with the stack cage to a deposit station (31), **characterised in that** an automatically actuable coupling device is present between carrier (11) and stack cage (10) and a displacing device (32) is present for further transport of the decoupled stack cage (10) from a deposit station (31) to the stack removal station (34).

2. Device according to claim 1, **characterised in that** the carrier (11) is constructed to be rotatable about a vertical axis (40).

3. Device according to claim 1 or 2, **characterised in that** the carrier (11) is constructed to be displaceable in stack direction and/or transversely to the stack direction.

4. Device according to one of claims 1 to 3, **characterised in that** a cooling station (26) is arranged between deposit station (31) and stack removal station (43).

5. Device according to one of claims 1 to 4, **characterised in that** the device for transferring the stack (8) from the buffer cage (7) to the stack cage (10) is driven by a servomotor (29).

6. Device according to one of claims 1 to 5, **characterised in that** the device for transferring the stack (8) from the buffer cage (7) to the stack cage (10) is formed by a rake (9) displaceable transversely to and in stack direction.

7. Device according to claim 8, **characterised in that** the rake (9) for transferring the stack (8) from the buffer cage (7) to the stack cage (10) is used for a time as a support device for the articles (3) transferred to the buffer cage (7).

8. Device according to claim 7, **characterised in that** the rake (9) initially transfers all stacks (8) from the buffer cage (7) to the stack cage (10) and then is guided in retracted state back into the buffer cage (7) in front of the foremost articles (3) and displaced in stack direction in several cycles each time by the stack distance between two articles (3).

9. Method according to claim 7, **characterised in that** the rake (9) after lateral movement-in behind the stack (8) disposed in the buffer cage (7) initially executes a stroke which corresponds with the height of the articles (3), then executes in several cycles each time a stroke corresponding with the stack distance of the articles (3) and then carries out transfer of the stack (8) to the stack cage (10).

## Revendications

1. Dispositif pour empiler des éléments (3) en matière synthétique thermoplastique, comprenant une cage tampon (7) dans laquelle sont transférés les éléments (3) d'une bande de film (2) chauffée, formés et découpés dans un outil de formage/découpage, et comprenant une cage de piles (10) tenue sur un support (11) en pivotement autour d'un axe horizontal (12), qui doit être déplacée et dans laquelle les éléments (3) sont transférés en forme de pile (8) depuis la cage tampon (7), et par laquelle les éléments (3) sont guidés vers une station de dépose (31),
**caractérisé en ce qu'**
un dispositif de couplage à actionnement automatique est prévu entre le support (11) et la cage de piles (10), et un dispositif de déplacement (32) est prévu pour le transport des cages de piles (10) découplées depuis une station de dépose (31) dans la station d'évacuation de piles (34).

2. Dispositif selon la revendication 1,
**caractérisé en ce que**
le support (11) est conçu pour pivoter autour d'un axe vertical (40).

3. Dispositif selon la revendication 1 ou 2,
**caractérisé en ce que**
le support (11) est conçu pour être déplacé dans la direction d'empilage et/ou transversalement à la direction d'empilage.

4. Dispositif selon l'une quelconque des revendications 1 à 3,
**caractérisé en ce qu'**
une station de refroidissement (36) est disposée entre la station de dépose (31) et la station d'évacuation de piles (43).

5. Dispositif selon l'une quelconque des revendications 1 à 4,
**caractérisé en ce que**
l'installation pour transférer les piles (8) de la cage tampon (7) dans la cage de piles (10) est entraînée par un servomoteur (29).

6. Dispositif selon l'une quelconque des revendications 1 à 5,
**caractérisé en ce que**
l'installation pour transférer les piles (8) de la cage tampon (7) dans la cage de piles (10) est formée par un râteau (9) pouvant être déplacé transversalement à la direction d'empilage et dans celle-ci.

7. Dispositif selon la revendication 6,
**caractérisé en ce que**
le râteau (9) pour transférer les piles (8) de la cage tampon (7) dans la cage de piles (10) est utilisé temporairement comme dispositif d'appui pour les éléments (3) transférés dans la cage tampon (7).

8. Dispositif selon la revendication 7,
**caractérisé en ce que**
le râteau (9) transfère d'abord toutes les piles (8) de la cage tampon (7) dans la cage de piles (10) puis, à l'état rentré, est guidé pour retourner dans la cage tampon (7) devant les éléments (3) les plus avancés, et déplacé dans la direction de la pile de plusieurs cadences respectivement de la distance de pile entre deux éléments (3).

9. Dispositif selon la revendication 7,
**caractérisé en ce que**
le râteau (9), après la rentrée latérale derrière les piles (8) se trouvant dans la cage tampon (7), exécute d'abord une course correspondant à la hauteur des éléments (3), puis plusieurs cadences de respectivement une course correspondant à la distance de pile des éléments (3) et finalement le transfert des piles (8) dans la cage de piles (10).
